**Europäisches Patentamt**

**European Patent Office**

**Office européen des brevets**

(19)

(11) Veröffentlichungsnummer: **0 176 872**
**B1**

(12) **EUROPÄISCHE PATENTSCHRIFT**

(45) Veröffentlichungstag der Patentschrift:
14.06.89

(51) Int. Cl.⁴: **B23K 26/08**

(21) Anmeldenummer: **85111812.5**

(22) Anmeldetag: **18.09.85**

(54) **Einrichtung zum berührungslosen Verändern der Oberfläche eines Gegenstandes.**

(30) Priorität: **25.09.84 DE 3435191**

(43) Veröffentlichungstag der Anmeldung:
**09.04.86 Patentblatt 86/15**

(45) Bekanntmachung des Hinweises auf die Patenterteilung:
**14.06.89 Patentblatt 89/24**

(84) Benannte Vertragsstaaten:
**AT BE CH DE FR GB IT LI NL**

(56) Entgegenhaltungen:
**DE-A- 2 000 846**
**US-A- 3 848 104**

**PATENTS ABSTRACTS OF JAPAN, Band 7,
Nr. 237 (M-250) [1382], 21 Oktober 1983, Seite 84 M 250;
& JP - A - 58 125 390 (NIPPON DENKI K.K.) 26-07-1983**

**Die Akte enthält technische Angaben, die nach dem
Eingang der Anmeldung eingereicht wurden und die
nicht in dieser Patentschrift enthalten sind.**

(73) Patentinhaber: **Siemens Aktiengesellschaft Berlin und
München, Wittelsbacherplatz 2, D-8000 München 2(DE)**

(72) Erfinder: **Mattelin, Antoon, Dipl.-Ing., Leliestraat 6,
B-8020 Oostkamp(BE)**

## Beschreibung

Die Erfindung betrifft eine Einrichtung zum berührungslosen Beschriften oder Markieren der Oberfläche eines Gegenstandes aus Glas mittels eines Laserstrahls.

Bei der Laser-Beschriftung von Gegenständen werden Einrichtungen verwendet, bei welchen in den Strahlengang eines von einem Laser erzeugten Laserstrahls nacheinander ein Fotoverschluß, eine entsprechend der Beschriftungsaufgabe durch einen Prozeßrechner oder einen Mikroprozessor steuerbare Ablenkeinrichtung und ein Objektiv angeordnet sind, welches den Laserstrahl auf die Oberfläche eines zu beschriftenden Gegenstandes fokussiert. Mit der Laser-Beschriftung können dann Gegenstände aus Metall, Keramik, Halbleitermaterialien und einer Vielzahl von Kunststoffen entsprechend der Beschriftungsaufgabe mit Buchstaben, Ziffern, Markierungen, Firmensymbolen oder grafischen Darstellungen beschriftet werden. Dabei kann die Beschriftung in Gravierschrift, in Schmelzschrift, in Verdampfungsschrift oder durch eine Verfärbung der Oberfläche ausgeführt werden. Die Ablenkeinrichtung der bekannten Einrichtung besteht aus einem ersten Ablenkspiegel für die horizontale Ablenkung des Laserstrahls und einem zweiten Ablenkspiegel für die vertikale Ablenkung des Laserstrahls, wobei beide Ablenkspiegel als Galvanometerspiegel ausgebildet sind. Derartige Galvanometerspiegel zeichnen sich durch geringe Trägheitsmomente der beweglichen Teile aus. Die Ablenkeinrichtung erfüllt auch noch gleichzeitig die Aufgabe einer Wobbeleinrichtung, durch welche der Laserstrahl in horizontaler und vertikaler Richtung derart gewobbelt wird, daß er auf der Oberfläche des zu beschriftenden Gegenstandes einen die Strichstärke der Beschriftung bestimmenden Kreis beschreibt. Hierzu wird der Spule des Galvanometerspiegels für die horizontale Ablenkung eine Spannung $U_x = \sin \omega t$ zugeführt, während der Spule des Galvanometerspiegels für die vertikale Ablenkung eine Spannung $U_y = \sin (\omega t + \alpha)$ zugeführt wird, wobei mit $\omega$ die Wobbelfrequenz, mit $t$ die Zeit und mit $\alpha$ der Winkel der Phasenverschiebung bezeichnet sind. Der Winkel $\alpha$ wird dabei so eingestellt, daß der Laserstrahl auf der Oberfläche des zu beschriftenden Gegenstandes einen Kreis beschreibt. Die mit der kombinierten Ablenk- und Wobbeleinrichtung erzielbaren Wobbelfrequenzen liegen maximal bei 120 bis 150 Hz.

Bei einem Einsatz der bekannten Einrichtung zum Beschriften, Dekorieren oder Markieren von Glas kommt es im Randbereich des gewobbelten Laserstrahls zu makroskopischen Aussplitterungen, die das optische Erscheinungsbild erheblich beeinträchtigen und ggf. zu Verletzungen führen.

Um auf Gegenstände aus Glas mittels eines Laserstrahls Buchstaben, Ziffern, Markierungen, Eichstriche, Firmensymbole, grafische Darstellungen und Ornamente in einer hochwertigen Qualität aufbringen zu können, wurde daher nach anderen Wegen gesucht. Aus der DE-A 3 145 278 ist ein Verfahren zum berührungslosen Abtragen von Material von der Oberfläche eines Gegenstandes aus Glas bekannt, bei welchem der Laserstrahl zur Erzielung eines randscharfen Abtrages ohne Absplitterungen durch eine teilweise absorbierende Matrix geführt und in eine Vielzahl von Einzelstrahlen aufgeteilt wird. Hierdurch wird die im Laserstrahl zur Verfügung stehende Energie im Strahlquerschnitt aufgeteilt, und die Einzelstrahlen können an eine gewünschte Abtragung angepaßt werden, zwischen dem Laser und dem Werkstück muß jedoch eine Maske angeordnet werden, welche die Form der Beschriftung, Markierung usw. bestimmt. Die hohe Flexibilität von Einrichtungen mit einem entsprechend der Beschriftungsaufgabe steuerbaren Laserstrahl kann daher nicht erreicht werden.

Aus der US-A 3 848 104 ist eine Einrichtung zur Wärmebehandlung metallischer Oberflächen und insbesondere zum Härten bekannt, bei welcher ein Laserstrahl über eine Wobbeleinrichtung mit zwei nacheinander in den Strahlengang eingefügten Ablenkspiegeln auf die Oberfläche des jeweiligen Werkstückes projiziert wird. Anstelle der Wobbeleinrichtung mit zwei Ablenkspiegeln kann auch eine Wobbeleinrichtung mit einem einzigen in zwei Richtungen oszillierenden Ablenkspiegel verwendet werden. Eine Kombination beider Systeme mit Wobbelfrequenzen von beispielsweise 300 Hz ist ebenfalls möglich. Dabei überstreicht der Laserstrahl die Oberfläche des Werkstückes vollständig, wobei in ausgewählten Oberflächenbereichen, die mit einem absorbierenden Material bedeckt sind, eine selektive Aufheizung der Oberfläche stattfindet.

Der Erfindung liegt die Aufgabe zugrunde, eine Einrichtung zum berührungslosen Beschriften oder Markieren der Oberfläche eines Gegenstandes aus Glas mittels eines Laserstrahls zu schaffen, die eine flexible Beschriftung oder Markierung in einer hochwertigen Qualität ermöglicht.

Diese Aufgabe wird erfindungsgemäß dadurch gelöst, daß im Strahlengang des durch ein Objektiv auf die Oberfläche des Gegenstandes fokussierbaren Laserstrahls nacheinander eine auf Wobbelfrequenzen von mindestens 500 Hz einstellbare Wobbeleinrichtung und eine Ablenkeinrichtung zur entsprechend der jeweiligen Beschriftungs- oder Markierungsaufgabe steuerbaren Ablenkung des Laserstrahls angeordnet sind.

Der Erfindung liegt die Erkenntnis zugrunde, daß beim berührungslosen Beschriften oder Markieren der Oberfläche eines Gegenstandes aus Glas makroskopische Aussplitterungen im Randbereich nur durch eine Erhöhung der Wobbelfrequenzen auf mindestens 500 Hz vermieden werden können. Da in der Ablenkeinrichtung zur Erzielung der erforderlichen Ablenkwinkel des Laserstrahls Ablenkspiegel mit einer gewissen Mindestgröße eingesetzt werden müssen, sind die Trägheitsmomente der beweglichen Teile so groß, daß mit den bisher verwendeten kombinierten Ablenk- und Wobbeleinrichtungen die für Gegenstände aus Glas erforderlichen Erhöhungen der Wobbelfrequenzen auf mindestens 500 Hz nicht erreicht werden können. Durch die Verwendung von separaten Wobbeleinrichtungen, die nur sehr kleine Ablenkwinkel erfordern, können die Ablenkspiegel und deren Antriebe jedoch so stark verkleinert werden, daß durch die entsprechende Reduzierung der Trägheitsmomente der beweglichen Teile wesentlich höhere Wobbelfrequenzen realisiert werden können und insbesondere auch ein Resonanzbetrieb ermöglicht wird.

Die Wobbeleinrichtung kann aus zwei nacheinander in den Strahlengang des Laserstrahls eingefügten und in verschiedenen Richtungen mit verschiedenen Wobbelfrequenzen drehbaren Ablenkspiegeln bestehen. Diese Wobbeleinrichtung entspricht damit einer verkleinerten Ausführungsform der üblichen Ablenkeinrichtung.

Die Wobbeleinrichtung kann aber auch aus einem einzigen, unabhängig voneinander in zwei verschiedenen Richtungen mit verschiedenen Wobbelfrequenzen drehbaren Ablenkspiegel bestehen. Ein zweiter Ablenkspiegel kann hier also entfallen.

Vorzugsweise ist die Wobbeleinrichtung derart einstellbar, daß der Laserstrahl auf der Oberfläche des Gegenstandes einen Kreis beschreibt. Diese Kreisform ermöglicht gleichmäßige Strichstärken in sämtlichen Richtungen. Bei der Laser- Beschriftung von Gegenständen aus Glas wird der Durchmesser des Kreises vorzugsweise auf mindestens 0,5 mm eingestellt. Für eine gute Lesbarkeit der Laser-Beschriftung hat es sich als sehr günstig herausgestellt, wenn der Durchmesser des Kreises auf ca. 1 mm eingestellt wird.

Im folgenden werden Ausführungsbeispiele der Erfindung anhand der Zeichnung näher erläutert. Es zeigen:

Figur 1 eine erste Einrichtung zur Laser-Beschriftung in stark vereinfachter schematischer Darstellung,

Figur 2 eine zweite Einrichtung zur Laser-Beschriftung in stark vereinfachter schematischer Darstellung,

Figur 3 die konstruktive Ausführung der in Figur 2 dargestellten Ablenkeinrichtung,

Figur 4 die Spur des gewobbelten Laserstrahls auf der Oberfläche eines zu beschriftenden Gegenstandes und

Figur 5 die Abtragsspur des Laserstrahls auf der Oberfläche eines Gegenstandes aus Glas.

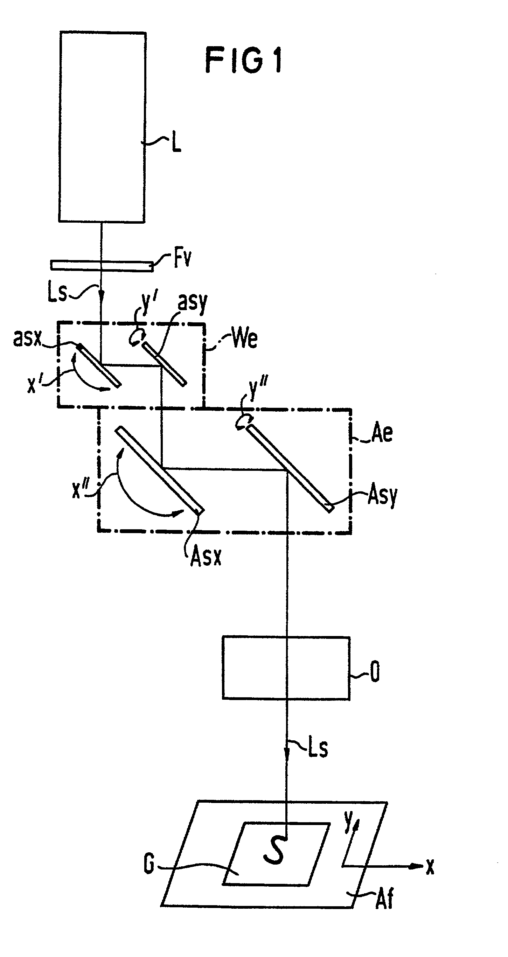

Figur 1 zeigt in stark vereinfachter schematischer Darstellung eine Einrichtung zur Laser-Beschriftung eines auf einer Arbeitsfläche Af angeordneten Gegenstandes G. Diese Einrichtung umfaßt einen Laser L, welcher einen Laserstrahl Ls erzeugt, in dessen Strahlengang aufeinanderfolgend ein Fotoverschluß Fv, eine Wobbeleinrichtung We, eine Ablenkeinrichtung Ae und ein Objektiv O angeordnet sind, welches den Laserstrahl Ls auf die Oberfläche des zu beschriftenden Gegenstandes G fokussiert. Die Lage des Gegenstandes G auf der Arbeitsfläche Af ist dabei in bezug auf ein ebenes, kartesisches x, y-Koordinatensystem festgelegt.

Die Wobbeleinrichtung We hat die Aufgabe, den Laserstrahl Ls in der horizontalen Richtung x und in der vertikalen Richtung y mit vorgebbaren Amplituden periodisch so auszulenken, daß er auf der Oberfläche des Gegenstandes G einen Kreis beschreibt, dessen Durchmesser die Strichstärke der Beschriftung bestimmt. Dementsprechend besteht die Wobbeleinrichtung We aus zwei nacheinander in den Strahlengang des Laserstrahls Ls eingefügten drehbaren Ablenkspiegeln asx und asy, wobei der Ablenkspiegel asx zur Auslenkung des Laserstrahls Ls in der x-Richtung in Richtung des Doppelpfeiles x' drehbar ist, während der Ablenkspiegel asy zur Auslenkung des Laserstrahls Ls in der x-Richtung in Richtung des Doppelpfeiles y' drehbar ist. Bei den beiden Ablenkspiegeln asx und asy handelt es sich um extrem kleine Galvanometerspiegel, die eine Wobbelung des Laserstrahls mit Wobbelfrequenzen $\omega$ von mindestens 500 Hz erlauben. Hierzu wird der Spule des Ablenkspiegels asx eine Wechselspannung $Ux = \sin\omega t$ zugeführt, während der Spule des Ablenkspiegels asy eine dazu um den Winkel $\alpha$ phasenverschobene Wechselspannung $Uy = \sin(\omega t + \alpha)$ zugeführt wird. Der Winkel $\alpha$ wird mit Hilfe eines Potentiometers so eingestellt, daß der Laserstrahl Ls auf der Oberfläche des Gegenstandes G einen Kreis beschreibt, wobei die hierzu erforderliche Größe des Winkels $\alpha$ zur Kompensation von Verzeichnungen nicht genau 90° beträgt.

Die Ablenkeinrichtung Ae hat die Aufgabe, den gewobbelten Laserstrahl Ls in der horizontalen Richtung x und in der vertikalen Richtung y abzulenken, wobei jedoch wesentlich größere Ablenkwinkel als bei der Wobbeleinrichtung We gefordert werden. Dementsprechend besteht die Ablenkeinrichtung Ae aus zwei nacheinander in den Strahlengang des ge wobbelten Laserstrahls Ls eingefügten Ablenkspiegeln Asx und Asy, wobei der Ablenkspiegel Asx zur Ablenkung des gewobbelten Laserstrahls Ls in der x-Richtung in Richtung des Doppelpfeiles x" drehbar ist, während der Ablenkspiegel Asy zur Ablenkung des gewobbelten Laserstrahls Ls in der y-Richtung in Richtung des Doppelpfeiles y' drehbar ist. Bei den beiden Ablenkspiegeln Asx und Asy handelt es sich um Galvanometerspiegel, deren Größe der erforderlichen Ablenkwinkeln angepaßt ist. Die Steuerung der Ablenkspiegel Asx und Asy entsprechend der jeweiligen Beschriftungsaufgabe erfolgt beispielsweise durch einen Prozeßrechner oder durch einen Mikroprozessor.

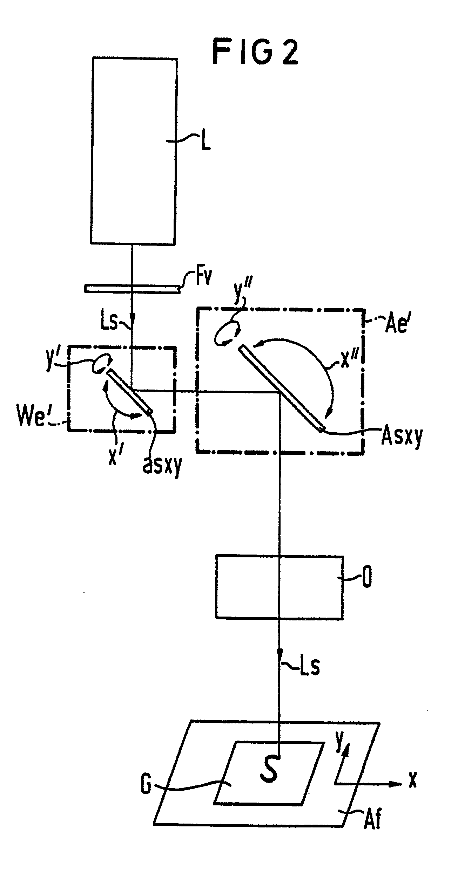

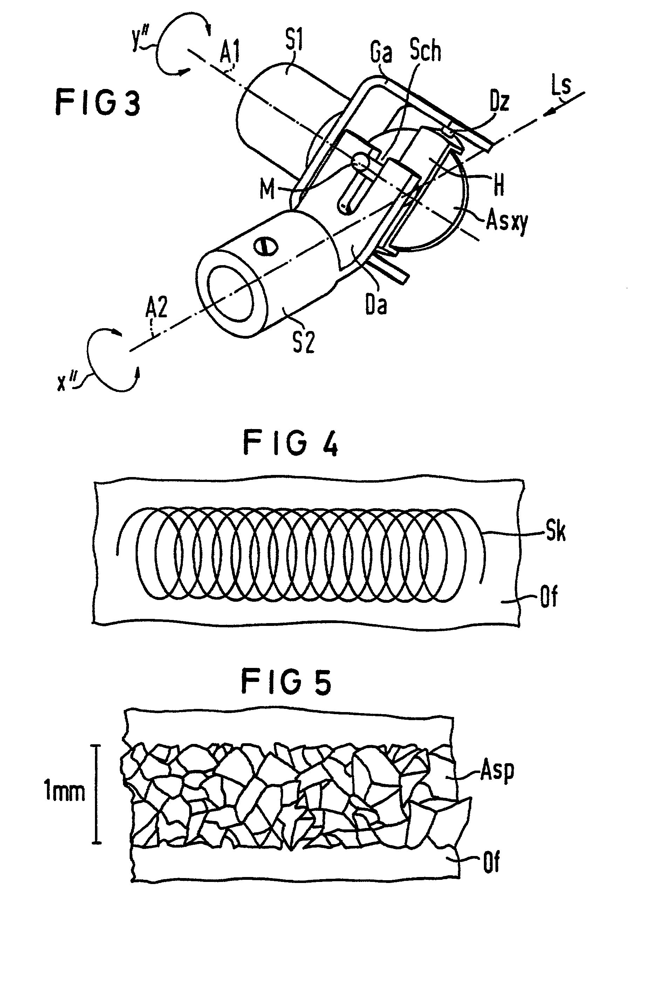

Figur 2 zeigt in stark vereinfachter schematischer Darstellung eine Einrichtung zur Laser-Beschriftung, die sich von der in Figur 1 dargestellten Einrichtung nur durch die anderen Ausgestaltungen der mit We' bezeichneten Wobbeleinrichtung und der mit Ae' bezeichneten Ablenkeinrichtung unterscheidet. Die Wobbeleinrichtung We' besteht aus einem einzigen Ablenkspiegel asxy, der zur Auslenkung des Laserstrahls Ls in der x-Richtung in Richtung des Doppelpfeiles x' und unabhängig davon zur Auslenkung des Laserstrahls Ls in der y-Richtung in Richtung des Doppelpfeiles y' drehbar ist. Die Wobbelung des Laserstrahls Ls erfolgt über entsprechende Galvanometerantriebe des Ablenkspiegels asxy auf die bereits im Zusammenhang mit Figur 1 beschriebene Weise. Auch die Ablenkeinrichtung Ae' besteht aus einem einzigen Ablenkspiegel Asxy, der zur Ablenkung des gewobbelten Laserstrahls Ls in der x-Richtung in Richtung des Doppelpfeiles x" und unabhängig davon zur Auslenkung des gewobbelten Laserstrahls Ls in der y-Richtung in Richtung des Doppelpfeiles y' drehbar ist. Die Ablenkung des gewobbelten Laserstrahls Ls erfolgt über entsprechende Galvanometerantriebe des Ablenkspiegels Asxy, die entsprechend der jeweiligen Be schriftungsaufgabe beispielsweise durch einen Prozeßrechner oder einen Mikroprozessor steuerbar sind. Die konstruktive Ausgestaltung der Ablenkeinrichtung Ae' mit dem Ablenkspiegel Asxy geht aus Figur 3 hervor. Dort ist zu erkennen, daß eine als Hohlwellenstummel ausgebildete erste drehbare Spindel S1 eine Gabel Ga trägt, in welcher eine Halterung H über Drehzapfen Dz drehbar gelagert ist. Auf die Halterung H ist der kreisförmige Ablenkspiegel Asxy mit seiner Rückseite aufgeklebt. Die Gabel G und die Halterung H mit den beiden Drehzapfen Dz bilden ein Gabelgelenk, welches so ausgebildet ist, daß die Achse A1 der ersten Spindel S1 und die nicht näher dargestellte Drehzapfenachse senkrecht aufeinanderstehen.

Eine ebenfalls als Hohlwellenstummel ausgebildete zweite drehbare Spindel S2 ist so ausgerichtet, daß ihre Achse A2 senkrecht auf der Achse A1 steht und genau durch den Schnittpunkt der Achse A1 und der Drehzapfenachse geht. Die Anlenkung des Ablenkspiegels Asxy an die zweite Spindel S2 erfolgt über einen Dreharm Da und einen an der Halterung H des Ablenkspiegels Asxy befestigten Mitnehmer M. Bei dem Dreharm Da handelt es sich um einen Flachstab, der mit dem vorderen Ende der zweiten Spindel S2 fest verbunden ist und um einen Winkel von 45° zur Achse A2 der zweiten Spindel S2 geneigt ist. In den Dreharm Da ist ein zum vordern Ende hin offener Schlitz Sch eingebracht, dessen Mittelebene in einer durch die Achse A2 gehenden Ebene liegt. Der in dem Schlitz Sch geführte Mitnehmer M ist aus einem geraden prismatischen Rundstab gebildet, dessen Durchmesser nur geringfügig kleiner ist als die Breite des Schlitzes Sch. Im übrigen ist der Mitnehmer M zur Spiegelfläche des Ablenkspiegels Asxy derart ausgerichtet, daß seine Längsachse durch den gemeinsamen Schnittpunkt der Achse A1, der Achse A2 und der Drehzapfenachse geht.

Der abzulenkende Laserstrahl Ls ist so ausgerichtet, daß er in Richtung der Achse A2 im Schnittpunkt der Achsen A1 und A2 auf die Spiegelfläche des Ablenkspiegels Asxy auftrifft und in der Ausgangsstellung um einen Winkel von 90° nach unten abgelenkt wird. Bei einer Verdrehung der ersten Spindel S1 in Richtung des Doppelpfeiles x" ergibt sich eine entsprechende Ablenkung in y-Richtung (vgl. Figur 2), wobei sich der Mitnehmer M in dem Schlitz Sch bewegt, ohne auf die Spindel S2 ein Drehmoment zu übertragen. Bei einer Verdrehung der zweiten Spindel S2 in Richtung des Doppelpfeiles x" ergibt sich über den Dreharm Da und den Mitnehmer M eine Drehung der Ablenkspiegels Asxy um die Drehzapfenachse mit einer entsprechenden Auslenkung des Laserstrahls Ls in der x-Richtung (vgl. Figur 2), wobei auch bei diesem Vorgang kein Drehmoment auf die Spindel S1 übertragen wird. Eine gleichzeitige Verdrehung der Spindeln S1 und S2 führt zu entsprechenden x-, y-Kurven in der Ebene der Arbeitsfläche Af (vgl. Figur 2). Die gesteuerte Drehung der Spindeln S1 und S2 erfolgt dabei über in Figur 3 nicht dargestellte Galvanometerantriebe.

Die in Figur 2 dargestellte Wobbeleinrichtung We' mit dem Ablenkspiegel asxy ist konstruktiv genau so ausgebildet, wie die in Figur 3 dargestellte Ablenkeinrichtung Ae' mit dem Ablenkspiegel Asxy, wobei die Wobbeleinrichtung We' jedoch eine wesentlich kleinere Baugröße aufweist.

Die Figuren 4 und 5 zeigen die Spur und die Abtragsspur des gewobbelten Laserstrahls Ls bei der Laser-Beschriftung eines Gegenstandes G aus Glas mit Hilfe der in Figur 1 dargestellten Einrichtung. Bei dem in Figur 1 dargestellten Laser L handelt es sich um einen gepulsten $CO_2$-Laser mit einer Emissionswellenlänge von 10,6 µm und einer Gesamtausgangsleistung von 8 Watt. Der von diesem $CO_2$-Laser erzeugte Laserstrahl Ls wird in der Wobbeleinrichtung We derart gewobbelt, daß er auf der Oberfläche des Gegenstandes G einen Kreis mit einem Durchmesser von 1 mm beschreibt, wobei die Wobbelfrequenz 600 Hz beträgt. Wird dieser Wobbelung des Laserstrahls Ls dann durch die Ablenkeinrichtung Ae eine Schreibbewegung überlagert, so entsteht auf der Oberfläche Of des Gegenstandes G als Spur des Laserstrahls Ls eine in Figur 4 dargestellte Schleifenkurve Sk. Diese in Figur 4 in der horizontalen Schreibrichtung auseinandergezogen dargestellte Schleifenkurve Sk ist bei der angegebenen Wobbelfrequenz von 600 Hz und bei einer Schreibgeschwindigkeit von 200 mm pro Sekunde in Wirklichkeit wesentlich dichter und mit so vielen Überlappungen ausgebildet, daß zumindest die mittleren Bereiche des Schriftzuges auf der Oberfläche Of vom Laserstrahl Ls innerhalb kurzer Zeit dreifach überstrichen werden. Dabei ist diese mehrfache Überstreichung von entscheidender Bedeutung für die Qualität des zu erzeugenden Schriftzuges. Durch die Einwirkung des Laserstrahls Ls auf die Oberfläche Of entsteht dann die in Figur 5 dargestellte Abtragsspur Asp, welche den Schriftzug mit einer Strichstärke von 1 mm bildet. Wie zu erkennen ist, wird die Abtragsspur Asp dadurch gebildet, daß auf der Oberfläche Of eine Vielzahl von Mikrorissen entstehen, wobei diese Mikrorisse einen überraschend scharfen Rand der Abtragsspur Asp bilden. Das optische Erscheinungsbild der in Figur 5 dargestellten Abtragsspur Asp entspricht etwa dem optischen Erscheinungsbild eines mit Hilfe von Flußsäure in die Oberfläche eines Gegenstandes aus Glas geätzten Striches.

**Patentansprüche**

1. Einrichtung zum berührungslosen Beschriften oder Markieren der Oberfläche eines Gegenstandes (G) aus Glas mittels eines Laserstrahls (Ls), dadurch gekennzeichnet, daß im Strahlengang des durch ein Objektiv (O) auf die Oberfläche des Gegenstandes (G) fokussierbaren Laserstrahls (Ls) nacheinander eine auf Wobbelfrequenzen von mindestens 500 Hz einstellbare Wobbeleinrichtung (We; We') und eine Ablenkeinrichtung (Ae; Ae') zur entsprechend der jeweiligen Beschriftungs- oder Markierungsaufgabe steuerbaren Ablenkung des Laserstrahls (Ls) angeordnet sind.

2. Einrichtung nach Anspruch 1, dadurch gekennzeichnet, daß die Wobbeleinrichtung (We) aus zwei nacheinander in den Strahlengang des Laserstrahls (Ls) eingefügten und in verschiedenen Richtungen (x', y') mit verschiedenen Wobbelfrequenzen drehbaren Ablenkspiegeln (Asx, Asy) besteht.

3. Einrichtung nach Anspruch 1, dadurch gekennzeichnet, daß die Wobbeleinrichtung (W') aus einem einzigen, unabhängig voneinander in zwei verschiedenen Richtungen (x', y') mit verschiedenen Wobbelfrequenzen drehbaren Ablenkspiegel (Asxy) besteht.

4. Einrichtung nach einem der vorhergehenden Ansprüche, dadurch gekennzeichnet, daß die Wobbeleinrichtung (We; We') derart einstellbar ist, daß der Laserstrahl (Ls) auf der Oberfläche des Gegenstandes (G) einen Kreis beschreibt.

5. Einrichtung nach Anspruch 4, dadurch gekennzeichnet, daß der Durchmesser des Kreises auf mindestens 0,5 mm einstellbar ist.

6. Einrichtung nach Anspruch 5, dadurch gekennzeichnet, daß der Durchmesser des Kreises auf ca. 1 mm einstellbar ist.

**Claims**

1. Appliance for the contactless labelling or marking of the surface of an object (G) of glass by means of a laser beam (Ls), characterized in that arranged one after another in the beam path of the laser beam (Ls), which can be focused onto the surface of the object (G) by an objective (O), are a wobbler device (We; We') which can be set to wobble frequencies of at least 500 Hz, and a deflecting device (Ae; Ae') for the controllable deflection of the laser beam (Ls) in accordance with the particular labelling or marking task.

2. Appliance according to Claim 1, characterized in that the wobbler device (We) consists of two deflecting mirrors (Asx, Asy) inserted one after another in the beam path of the laser beam (Ls) and rotatable in different directions (x', y') with different wobble frequencies.

3. Appliance accordinig to Claim 1, characterized in that the wobbler device (We') consists of a single deflecting mirror (Asxy) rotatable in two different directions (x', y') independently of one another with different wobble frequencies.

4. Appliance according to one of the preceding claims, characterized in that the wobbler device (We; We') can be set in that a way that the laser beam (Ls) describes a circle on the surface of the object (G).

5. Appliance according to Claim 4, characterized in that the diameter of the circle can be set to at least 0.5 mm.

6. Appliance according to Claim 5, characterized in that the diameter of the circle can be set to approximately 1 mm.

**Revendications**

1. Appareil pour faire des inscriptions ou des marquages sans contact sur la surface d'un objet (G) en verre au moyen d'un rayon laser (Ls), caractérisé en ce qu'il comprend, dans la marche du rayon laser (Ls), pouvant être concentré par un objectif (O) sur la surface de l'objet (G), l'un à la suite de l'autre, un dispositif vobulateur (We; We') ajustable à des fréquences de vobulation d'au moins 500 Hz et un dispositif de balayage (Ae; Ae') pour la déviation commandée du rayon laser (Ls) en fonction de l'inscription ou du marquage à réaliser.

2. Appareil selon la revendication 1, caractérisé en ce que le dispositif vobulateur (We) comprend deux miroirs de déviation (Asx, Asy) placés l'un après l'autre dans la marche du rayon laser (Ls) et pouvant être tournés en différentes directions (x', y') à différentes fréquences de vobulation.

3. Appareil selon la revendication 1, caractérisé en ce que le dispositif vobulateur (We') comprend un seul miroir de déviation (Asxy) pouvant être tourné indépendamment en deux directions différentes (x', y') à des fréquences de vobulation différentes.

4. Appareil selon une des revendications précédentes, caractérisé en ce que le dispositif vobulateur (We; We') est réglable de manière que le rayon laser (Ls) décrive un cercle sur la surface de l'objet (G).

5. Appareil selon la revendication 4, caractérisé en ce que le diamètre du cercle peut être réglé à au moins 0,5 mm.

6. Appareil selon la revendication 5, caractérisé en ce que le diamètre du cercle est réglable à environ 1 mm.

FIG 1

# FIG 2

FIG 3

FIG 4

FIG 5